# EUROPEAN PATENT SPECIFICATION

(11) **EP 3 050 763 B1**
(45) Date of publication and mention of the grant of the patent: **07.11.2018**
(21) Application number: 14847581.7
(22) Date of filing: 09.09.2014
(51) Int. Cl.: B60S 3/06

(54) **DEVICE FOR AVOIDING PROTRUDING ELEMENTS ON VEHICLES DURING THE WASHING PROCESS**
VORRICHTUNG ZUR VERMEIDUNG VORSTEHENDER ELEMENTE AUF KRAFTFAHRZEUGEN BEI WASCHVERFAHREN
DISPOSITIF POUR ÉVITER LES ÉLÉMENTS SAILLANTS D'UN VÉHICULE PENDANT LE PROCESSUS DE LAVAGE

(30) Priority: 27.09.2013 ES 201331113
(43) Date of publication of application: 03.08.2016
(73) Proprietor: Istobal, S.A., 46250 La Alcudia (Valencia) (ES)
(72) Inventor: TOMÁS PUCHADES, Yolanda, E-46250 La Alcudia (Valencia) (ES)
(74) Representative: Ungria López, Javier
(86) International application number: PCT/ES2014/070685
(87) International publication number: WO 2015/044483

(56) References cited:
- EP-A1- 0 012 683
- JP-A- 2012 086 646
- US-A- 1 988 665
- US-A- 4 320 551
- US-A- 5 898 966

## Description

### OBJET OF THE INVENTION

The present invention, as expressed in the title of this specification, relates to a device for avoiding protruding elements on vehicles during the washing process that is carried out by means of pairs of vertical rollers running first over a front end of the vehicle, then over the sides and finally over the back end.

It may be applied to the washing process of large vehicles, such as for example buses and trucks, which have outside mirrors that the vertical rollers need to overcome in order to avoid damaging them while the vehicle is being washed.

Based on this premise, the aim of the invention is to overcome and avoid the outer obstacles and keep the vertical rollers in contact, during the washing process, with the angular areas of the vehicles underneath the outer obstacles in order to ensure they are also properly washed.

### BACKGROUND OF THE INVENTION

Washing equipment with brushes assembled on mobile arms controlled by means of pneumatic cylinders and other actuators, such as counterweights, are well known.

This system of mobile arms is extremely simple and reliable for washing the vehicle as it passes by, it not being possible to control the speed at which the vehicles moves.

With this system, the brushes used for washing the front and sides of the vehicle start washing the central portion of the front end of the vehicle and, as the vehicle moves on, they move first towards the sides (opening of the arms) and then turn at the corners of the front end and continue washing the sides; such that the brushes carry out a continuous and enveloping movement from the front towards the sides of the vehicle.

The pneumatic cylinders serve to maintain the desired pressure of the brushes against the bodywork (pushing in the closing direction of the arms). They also serve to open the brushes when the washing operations are not wanted, thus making the free passage of vehicles possible.

Buses usually have outer rear-view mirrors on the frontal portion in addition to other obstacles; such that they are precisely in the middle of said enveloping path of the brushes that wash the front end and collateral sides of the vehicle.

When the first machines for washing buses were developed, said rear-view mirrors were small or did not protrude much, as such they did not pose a problem for the washing process, as their dimensions were smaller than the length of the bristles of the brushes.

Over time, these mirrors have increased in size with the result that they currently have become elements that protrude a great deal.

With the current size of the rear-view mirrors, it is impossible for the brushes to carry out their original enveloping movement to wash the front and sides.

Nowadays, in the washing machines used for washing buses as they pass by, the brushes washing the front and sides are provided with a command device to cause the opening of the brushes just before they touch the mirrors thus enabling them to be closed, once the risk zone has been overcome. This means that the movement is no longer continuous, but rather the brushes must retract during their moving path in order to clear or avoid the mirrors.

When the brushes retract to avoid the mirrors, the surface that is not being washed corresponds to the total height of the vehicle and not only to that remaining behind the mirrors. It should be taken into account that the portions left unwashed, from underneath the mirrors up to the lower portion of the bodywork, are one of the dirtiest portions.

The brushes begin to retract with an opening command of the arms at a certain anticipated point. The circular path of the brushes during the opening motion is determined by the length of the arms in agreement with the dimensions of the vehicles to be washed and hence cannot be in turn adjusted to retract past or clear the mirrors at a point close enough thereto; consequently, this means that the retraction or avoiding motion must be a bit long, and therefore there is a significant portion of the front end of the vehicle that is unnecessarily left unwashed (usually up to 40 % of the vehicle width).

Moreover, the end of retracting or avoiding the mirrors, corresponding to the closure of the brushes against the lateral portion of the vehicle, is normally carried out taking the time variable into account, as there is no reference as to the instant position of the vehicle being washed. This implies, firstly, an imprecision regarding the point where the contact with the lateral portion of the vehicle resumes (unnecessary loss of washed surface) if it goes away too fast, and secondly, certain risk of contact with the rear-view mirrors themselves (which is exactly what it was intended to be avoided) if it goes away too slowly or if the vehicle stops moving forward.

Although some detection device could be added in order to synchronize the closure movement with the vehicle motion, normally this has not been justified, the problem being assumed and leaving the vehicle driver with the responsibility of the obtained result.

In the washing systems as the vehicles pass by, the driver of the vehicle is deemed a person with a minimum knowledge with regards to the operation of the machine. As a matter of fact, during the washing process, the driver is the operator of the equipment. Therefore, the quality and safety of the washing largely depends on how familiar the driver familiar is with the machine performance.

In the past, when mirrors were small and the brushes washed the front and sides in a continuous path, the washing as the vehicle passes by was a very easy and riskless task. In contrast, now, the need to incorporate the retraction or sudden changes in the brushes' path when they reach the outside mirrors has posed a great difficulty in the equipment operation and has caused the drivers to develop their own methods for executing the washing.

It is often observed that they enter at a constant speed until physically butting against the brushes that wash the front end, and then they stop until they are completely open, upon which they suddenly accelerate until they start closing. Obviously this is more comfortable and safer for the driver, but implies in all cases that there are even more surfaces left unwashed on the front and sides.

To date, a great number of washing devices have been employed that are provided with swinging brushes that adapt more or less precisely to the surface of the vehicle carrying out the cleaning by means of rotating brushes, and that for the most part do not take into account the obstacles they may encounter along the washing process.

In this respect, the patent identified with publication number US 4777688 is known, which describes a vehicle washing system with lateral brushes divided into two sections. The tube supporting the brush is inclined inwardly towards the washing enclosure at the upper end thereof but the two sections are aligned relative to the shaft. Such apparatus is of course ineffective to avoid obstacles such as the rear-view mirrors of the vehicles.

Secondly, the invention patent identified with publication number US 3593357 is also known, which describes a vehicle washing system provided with a pivoting vertical brush that is parted and driven by two independent motors, the brush sections being inclined relative to the vertical. This system cannot be used for avoiding large obstacles because, unlike the invention at hand, the two brush sections are fixed and do not allow a movement for clearing obstacles to be implemented.

Thirdly, the invention patent identified with publication number US 5898966 is known, which discloses a vertical brush for washing vehicles that is very similar to the one described in the previous patent, having a vertical brush formed by two independent sections, which has the particularity of being capable of inclining both sections in a predetermined manner, but unlike the present invention, it does not allow for the inclination to be changed when a obstacle appears during the washing process.

Therefore, currently there is no system for washing vehicles especially designed for solving the problem related to efficiently avoiding obstacles, such as rear-view mirrors protruding outside vehicles, and that enables the brush to not loose contact with the vehicle so as to minimize the surface left unwashed.

### DESCRIPTION OF THE INVENTION

In order to meet the aims and avoid the disadvantages mentioned in the preceding paragraphs, the invention proposes a device for avoiding protruding elements on vehicles during the washing process. Said device comprises upper and lower vertical rollers that turn driven by independent motors, while those vertical rollers are in turn coupled in pairs to vertical profiles of a fixed bridge by means of supporting structures, which articulate about main vertical shafts arranged so as to correspond to the vertical profiles of the fixed bridge.

Each one of the supporting structures comprises:
- an upper structure for holding the upper vertical roller, which modifies the continuous course of the cleaning path thereof when it reaches the respective outside mirror or obstacle of the vehicle to be washed; wherein said modification of the cleaning path allows for the outside obstacle to be avoided.
- a lower structure for holding the lower vertical roller, which is continuously in contact with the outer surface of the vehicle, even with each one of the angular areas of the vehicle underneath the respective rear-view mirror.

The upper vertical roller maintains a continuity with the lower vertical roller along the entire path thereof except for the area of the outside mirror or another obstacle.

According to a first embodiment of the invention, the upper structure for holding the upper vertical roller comprises a swinging head to which an upper end of the upper vertical roller is connected in a cantilever manner. The lower structure for holding the lower vertical roller comprises a first fixed frame.

Both the swinging head and the first fixed frame are coupled to a first rectangular framework that forms part of each one of the supporting structures, which articulate about the fixed bridge.

Still as far as the first embodiment is concerned, the swinging head rotates by means of a first pneumatic cylinder, which is articulately connected on a prolongation of the first rectangular framework, whereas the rod of said first pneumatic cylinder is connected to an extension that is the continuation of the swinging head.

The swinging head rotates about a horizontal shaft joined on one end to the first rectangular framework; wherein the upper vertical roller is mobilized, driven by the swinging head, in a vertical plane that is parallel to the vertical plane where the first rectangular framework is located.

According to a second embodiment of the invention, the upper structure for holding the upper vertical roller comprises a foldable frame, whereas the lower structure for holding the lower vertical roller comprises a second fixed frame.

In this case, both the foldable frame and the second fixed frame are coupled to a second rectangular framework that forms part of each one of the supporting structures, which articulate about the fixed bridge.

The mobility of the foldable frame is carried out by means of a second pneumatic cylinder coupled to the second rectangular framework and whose rod is connected to said foldable frame, the latter being moved about a second vertical shaft of the second rectangular framework.

According to a third embodiment of the invention, the upper structure for holding the upper vertical roller comprises a foldable upper brace, whereas the lower structure for holding the lower vertical roller comprises a fixed lower brace.

The two upper and lower braces comprise an angled configuration, and are in turn coupled to the main vertical shaft linked to each one of the vertical profiles of the fixed bridge.

For the purposes of helping to make this specification more readily understandable, a set of drawings constituting an integral part of the same has been included below, wherein by way of illustration and not limitation the object of the invention has been represented.

### BRIEF DESCRIPTION OF THE DRAWINGS

**Figure 1****.-** Represents a perspective view of the device for avoiding protruding elements or outside obstacles in vehicles during the washing process, object of the invention. In this figure, a first embodiment of the invention is shown in the normal washing position.
**Figure 2****.-** Shows another perspective view of that represented in the preceding figure, positioned so as to avoid outside obstacles.
**Figures 3a to 3d****.-** Show the cleaning process of the front end and part of the lateral portions of a bus using the device of the invention.

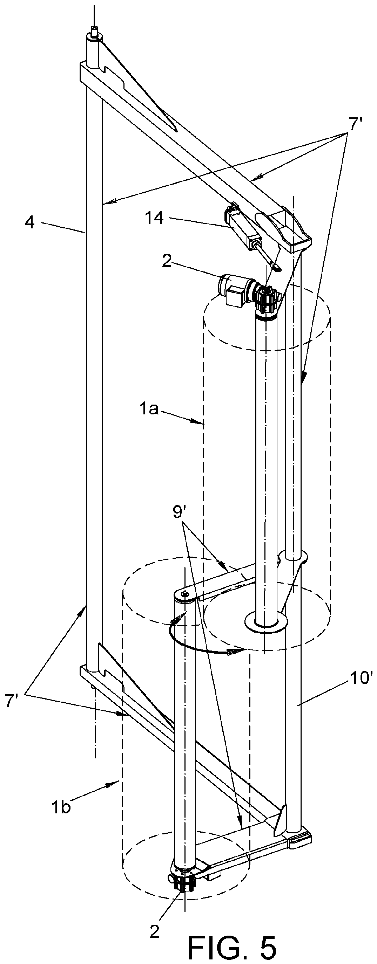

**Figures 4** **and** **5****.-** Show perspective views of the device of the invention, according to a second embodiment of the invention both at the normal position and at that adopted to avoid outside obstacles.
**Figures 6** **and** **7****.-** Show perspective views of the device of the invention, according to a third embodiment of the invention.

### DESCRIPTION OF AN EXEMPLARY EMBODIMENT OF THE INVENTION

Pursuant to the numbering used in the figures, the device for avoiding protruding elements on vehicles during the washing process involves the following terminology employed in the description:
- 1a.-: Upper vertical rollers.
- 1b.-: Lower vertical rollers.
- 2-: Independent motors.
- 3.-: Fixed bridge.
- 3a.-: Vertical profiles.
- 4.-: Main vertical shafts.
- 5.-: Bus.
- 5a.-: Front end.
- 5b.-: Sides.
- 5c.-: Rear end.
- 5d.-: Angular areas.
- 6.-: Mirrors or outside obstacles.
- 7.-: First rectangular framework.
- 7a.-: Prolongation.
- 7'.-: Second rectangular framework.
- 8.-: Swinging head.
- 8a.-: Extension.
- 9.-: First fixed frame.
- 9'.-: Second fixed frame.
- 10.-: First vertical shaft.
- 10'.-: Second vertical shaft.
- 11.-: First pneumatic cylinder.
- 12.-: Horizontal shaft.
- 13.-: Foldable frame.
- 14.-: Second pneumatic cylinder.
- 15.-: Foldable upper brace.
- 16.-: Fixed lower brace.

It comprises upper (1a) and lower (1b) vertical rollers, which rotate by means of independent motors (2), and are in turn coupled in pairs to vertical profiles (3a) of a fixed bridge (3) by means of supporting structures, which articulate about main vertical shafts (4) arranged so as to correspond to the vertical profiles (3a) of the fixed bridge (3).

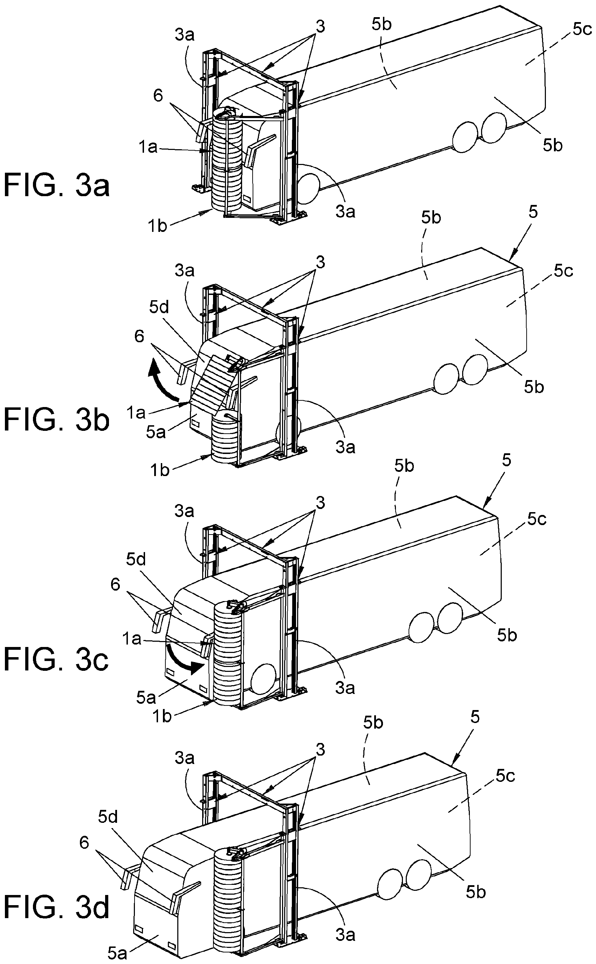

As shown in figures 3a to 3d, a vehicle, such as a bus (5), passes under the fixed bridge (3), to be cleaned with the vertical rollers (1a - 1b), such that the front end (5a) of the bus (5) is cleaned first, then the sides (5b) and finally the back end (5c).

While the vertical rollers (1a - 1b) are in motion in order to pass from the front end (5a) to the sides (5b) of the bus (5), it is necessary to clear and avoid outside mirrors (6) or other outside obstacles, so that the upper vertical rollers (1a) retract during the course of their path for clearing the outside mirrors (6), while the lower rollers (1b) maintain their course continuous, keeping the contact with the angular areas (5d) of the bus underneath the outside mirrors (6).

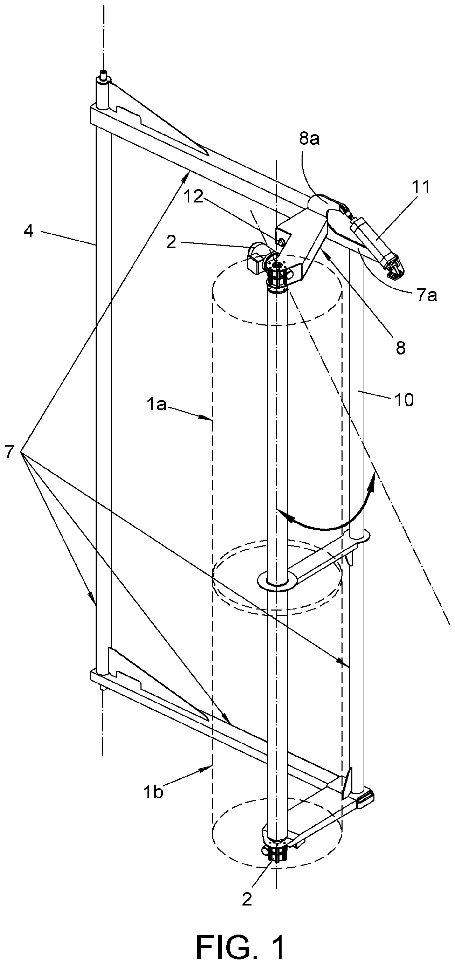

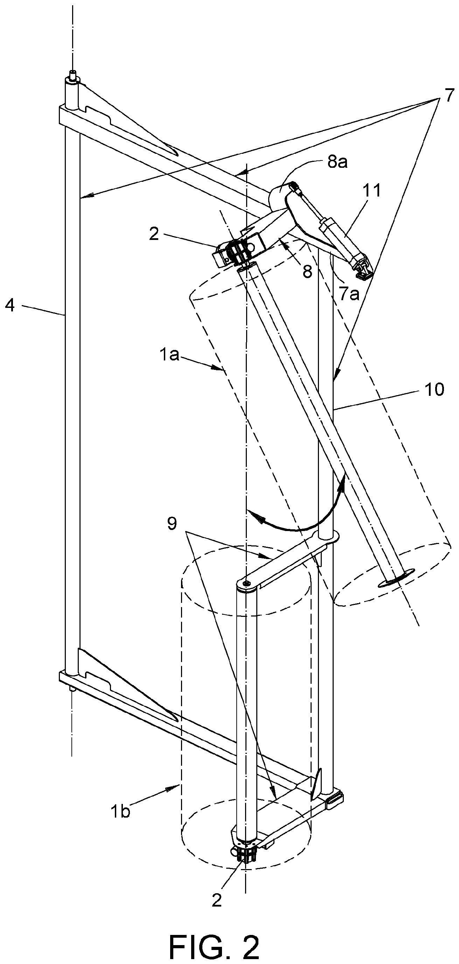

Based on this premise, in a first embodiment like the one shown in figures 1 and 2, the device of the invention comprises first supporting structures, each one of them comprising a first rectangular framework (7) the rear portion of which articulates about the respective vertical profile (3a) of the fixed bridge (3), whereas an upper roller (1a) by means of a swinging head (8) and another lower roller (1b) by means of a first fixed frame (9) are coupled to the front portion of the first rectangular framework (7).

The lower vertical roller (1b) is coupled to the first fixed frame (9) affixed to a first vertical shaft (10) forming part of the first rectangular framework (7).

In contrast, the upper vertical roller (1a) is connected in a cantilever manner by the upper end thereof to the swinging head (8), which moves in a vertical plane that is parallel to the vertical plane where the first framework rectangular (7) is located.

The swinging head (8) rotates by means of a first pneumatic cylinder (11), which is articulately connected on a prolongation (7a) of the first rectangular framework (7), whereas the rod of said first pneumatic cylinder (11) is connected to an extension (8a) that is the continuation of the swinging head (8). The swinging head (8) rotates about a horizontal shaft (12) joined on one end to the first rectangular framework (7).

In this first embodiment of the invention, when the swinging head (8) is at the rest position, the upper roller (1a) that it supports will be aligned in the same vertical than the matching lower vertical roller (1b), as shown in figure 1.

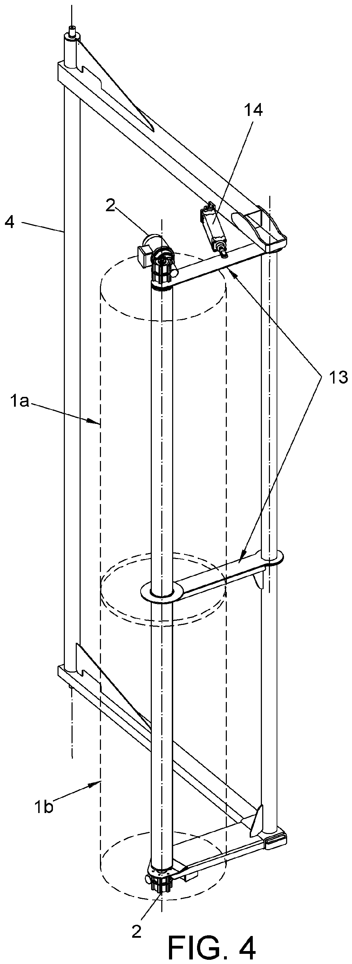

In a second embodiment, such as the one shown in figures 3 and 4, the device of the invention comprises second supporting structures, each one of them comprising a second rectangular framework (7') the rear portion of which articulates about the respective vertical profile (3a) of the fixed bridge (3), whereas the upper vertical roller (1a) by means of a foldable frame (13) and the other lower vertical roller (1 b) by means of a second fixed frame (9') are coupled to the front portion of the second rectangular framework (7').

The second fixed frame (9') is connected to a second vertical shaft (10') forming part of the second rectangular framework (7'), whereas the foldable frame (13) is articulately coupled to that same second vertical shaft (10'). The mobility of this foldable frame (13) is carried out by means of a second pneumatic cylinder (14) coupled to the second rectangular framework (7') and whose rod is connected to said foldable frame (13).

Likewise, in this second embodiment of the invention, when the foldable frame (13) is at the rest position, the upper roller (1a) that it supports will be aligned in the same vertical than the matching lower vertical roller (1b), as shown in figure 4.

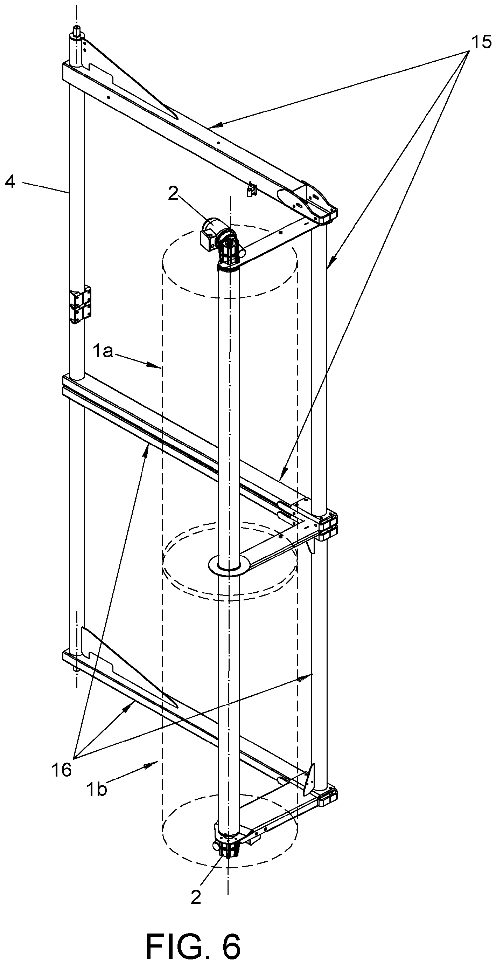

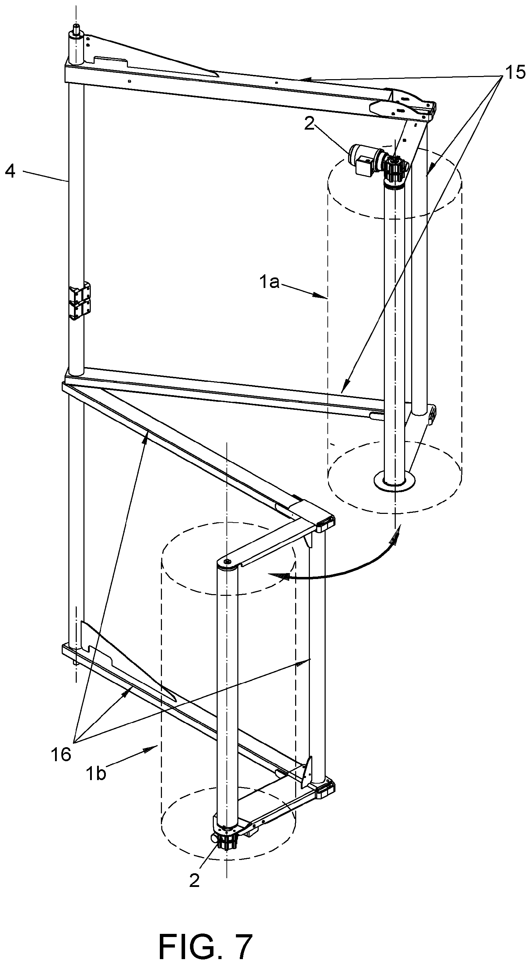

In a third embodiment, as the one shown in figures 6 and 7, the device of the invention comprises third supporting structures, each one of which comprises a foldable upper brace (15) supporting the upper vertical roller (1a) and a fixed lower brace (16), supporting the lower vertical roller (1b). These two frames have an angled configuration, and are in turn coupled to the main vertical shaft (4) linked to each one of the vertical profiles (3a) of the fixed bridge (3).

Likewise, in this third embodiment of the invention, when the foldable upper brace (15) is at the rest position, the upper vertical roller (1a) that it supports will be aligned in the same vertical than the matching lower vertical roller 1b, as shown in figure 6.

Although figures 3a to 3d show the first embodiment of the invention, it is obvious that the bus washing process may also be carried out with the second and third structures of the invention.

## Claims

1. **A device for avoiding protruding elements on vehicles during the washing process,** comprising upper (1a) and lower (1b) vertical rollers, which rotate by means of independent motors (2), and are in turn coupled in pairs to vertical profiles (3a) of a fixed bridge (3) by means of supporting structures, which articulate about main vertical shafts (4) arranged so as to correspond to said vertical profiles (3a) of the fixed bridge (3);
**characterized in that** each one of the supporting structures comprises:
- an upper structure for holding the upper vertical roller (1a), which modifies the continuous course of its cleaning path when it reaches an outside obstacle (6) of the vehicle to be washed; said modification of the cleaning path allowing the outside obstacle (6) to be avoided;
- a lower structure for holding the lower vertical roller (1b), which maintains continuous contact against the outer surface of the vehicle, even against each one of the areas under the outside obstacle (6);
wherein the upper vertical roller (1a) and lower vertical roller (1b) act as a single brush along their entire path except for the area of the outside obstacle (6) to be avoided.

2. **The device for avoiding protruding elements on vehicles during the washing process,** according to claim 1, **characterized in that**:
- the upper structure for holding the upper vertical roller (1a) comprises a swinging head (8) to which an upper end of the upper vertical roller (1a) is connected in a cantilever manner;
- the lower structure for holding the lower vertical roller (1b) comprises a first fixed frame (9);
- both the swinging head (8) and the first fixed frame (9) are coupled to a first rectangular framework (7) that forms part of each one of the supporting structures, which articulate about the fixed bridge (3).

3. **The device for avoiding protruding elements on vehicles during the washing process,** according to claim 2, **characterized in that**:
- the swinging head (8) rotates by means of a first pneumatic cylinder (11), which is articulately connected on a prolongation of the first rectangular framework (7), whereas the rod of said first pneumatic cylinder (11) is connected to an extension (8a) that is the continuation of the swinging head (8);
- the swinging head (8) rotates about a horizontal shaft (12) joined on one end to the first rectangular framework (7);
wherein the upper vertical roller (1a) moves in a vertical plane that is parallel to the vertical plane where the first framework rectangular (7) is located.

4. **The device for avoiding protruding elements on vehicles during the washing process,** according to claim 1, **characterized in that**
- the upper structure for holding the upper vertical roller (1a) comprises a foldable frame (13);
- the lower structure for holding the lower vertical roller (1b) comprises a second fixed frame (9');
- both the foldable frame (13) and the second fixed frame (9') are coupled to a second rectangular framework (7') that forms part of each one of the supporting structures, which articulate about the fixed bridge (3).

5. **The device for avoiding protruding elements on vehicles during the washing process,** according to claim 4, **characterized in that** the mobility of the foldable frame (13) is carried out by means of a second pneumatic cylinder (14) coupled to the second rectangular framework (7') and whose rod is connected to said foldable frame (13), the latter being moved about a second vertical shaft (10') of the second rectangular framework (7').

6. **The device for avoiding protruding elements on vehicles during the washing process,** according to claim 1, **characterized in that**:
- the upper structure for holding the upper vertical roller (1a) comprises a foldable upper brace (15);
- the lower structure for holding the lower vertical roller (1b) comprises a fixed lower brace (16);
- both braces (15) and (16) comprise an angled configuration, and are in turn coupled to the main vertical shaft (4) linked to each one of the vertical profiles (3a) of the fixed bridge (3).

## Patentansprüche

1. Einrichtung zur Umgehung hervorstehender Elemente an Fahrzeugen während des Waschvorgangs, mit einer oberen (1a) und einer unteren (1b) vertikalen Rolle, die mittels unabhängiger Motoren (2) in Drehung versetzt werden und die wiederum als Paare mit vertikalen Profilen (3a) einer fixierten Brücke (3) durch Haltestrukturen gekoppelt sind, die um vertikale Hauptschäfte (4) herum so gelenkig angeordnet sind, dass sie den vertikalen Profilen (3a) der fixierten Brücke (3) entsprechen;
**dadurch gekennzeichnet, dass** jede der Haltestrukturen aufweist:
- eine obere Struktur zum Halten der oberen vertikalen Rolle (1a), die den kontinuierlichen Verlauf ihrer Reinigungsbahn modifiziert, wenn sie ein äußeres Hindernis (6) des zu waschenden Fahrzeugs erreicht; wobei die Modifizierung der Reinigungsbahn es möglich macht, dass das äußere Hindernis (6) umgangen wird;
- eine untere Struktur zum Halten der unteren vertikalen Rolle (1b), die einen dauerhaften Kontakt zu der äußeren Fläche des Fahrzeugs und auch zu jedem der Bereiche unter dem äußeren Hindernis (6) beibehält;
wobei die obere vertikale Rolle (1a) und die untere vertikale Rolle (1b) als eine einzige Bürste entlang ihrer gesamten Bahn mit Ausnahme des Bereichs des zu umgehenden äußeren Hindernisses (6) agieren.

2. Einrichtung zur Umgehung hervorstehender Elemente an Fahrzeugen während des Waschvorgangs nach Anspruch 1, **dadurch gekennzeichnet, dass**:
- die obere Struktur zum Halten der oberen vertikalen Rolle (1a) einen Schwingkopf (8) aufweist, mit welchem ein oberes Ende der oberen vertikalen Rolle (1a) in Form eines Auslegers verbunden ist;
- die untere Struktur zum Halten der unteren vertikalen Rolle (1b) einen ersten fixierten Rahmen (9) aufweist;
- sowohl der Schwingkopf (8) als auch der erste fixierte Rahmen (9) mit einer ersten rechteckigen Rahmenstruktur (7) verbunden sind, die einen Teil jeweils der Haltestrukturen, die gelenkig um die fixierte Brücke (3) angeordnet sind, bildet.

3. Einrichtung zur Umgehung hervorstehender Elemente an Fahrzeugen während des Waschvorgangs nach Anspruch 2, **dadurch gekennzeichnet, dass**:
- der Schwingkopf (8) mittels eines ersten Pneumatikzylinders (11) in Drehung versetzbar ist, der gelenkig mit einer Verlängerung der ersten rechteckigen Rahmenstruktur (7) verbunden ist, wohingegen die Schubstange des ersten Pneumatikzylinders (11) mit einer Erweiterung (8a) verbunden ist, die die Fortsetzung des Schwingkopfs (8) ist;
- der Schwingkopf (8) um eine horizontale Welle (12) rotiert, die an einem Ende mit der ersten rechteckigen Rahmenstruktur (7) verbunden ist;
wobei die obere vertikale Rolle (1a) sich in einer vertikalen Ebene bewegt, die parallel zu der vertikalen Ebene ist, in der die erste rechteckige Rahmenstruktur (7) liegt.

4. Einrichtung zur Umgehung hervorstehender Elemente an Fahrzeugen während des Waschvorgangs nach Anspruch 1, **dadurch gekennzeichnet, dass**:
- die obere Struktur zum Halten der oberen vertikalen Rolle (1a) einen faltbaren Rahmen (13) aufweist;
- die untere Struktur zum Halten der unteren vertikalen Rolle (1b) einen zweiten fixierten Rahmen (9') aufweist;
- sowohl der faltbare Rahmen (13) als auch der zweite fixierte Rahmen (9') mit einer zweiten rechteckigen Rahmenstruktur (7') gekoppelt sind, die einen Teil jeweils der Haltestrukturen bildet, die gelenkig um die fixierte Brücke (3) herum angeordnet sind.

5. Einrichtung zur Umgehung hervorstehender Elemente an Fahrzeugen während des Waschvorgangs nach Anspruch 4, **dadurch gekennzeichnet, dass** die Beweglichkeit des faltbaren Rahmens (13) mittels eines zweiten pneumatischen Zylinders (14) gegeben ist, der mit der zweiten rechteckigen Rahmenstruktur (7') verbunden ist und dessen Schubstange mit dem faltbaren Rahmen (13) verbunden ist, wobei dieser um einen zweiten vertikalen Schaft (10') der zweiten rechteckigen Rahmenstruktur (7') bewegbar ist.

6. Einrichtung zur Umgehung hervorstehender Elemente an Fahrzeugen während des Waschvorgangs nach Anspruch 1, **dadurch gekennzeichnet, dass**:
- die obere Struktur zum Halten der oberen vertikalen Rolle (1a) einen faltbaren oberen Halter (15) aufweist;
- die untere Struktur zum Halten der unteren vertikalen Rolle (1b) einen fixierten unteren Halter (16) aufweist;
- beide Halter (15) und (16) einen angewinkelten Aufbau aufweisen und wiederum mit dem vertikalen Hauptschaft (4) verbunden sind, der jeweils mit den vertikalen Profilen (3a) der fixierten Brücke (3) verbunden ist.

## Revendications

1. Dispositif pour éviter des éléments en saillie sur des véhicules pendant le procédé de lavage, comprenant des rouleaux verticaux supérieurs (1a) et inférieurs (1b), lesquels tournent au moyen de moteurs indépendants (2), et sont couplés à leur tour en paires à des profils verticaux (3a) d'un pont fixe (3) au moyen de structures de support, lesquelles s'articulent autour d'arbres verticaux principaux (4) disposés afin de correspondre auxdits profils verticaux (3a) du pont fixe (3) ;
**caractérisé en ce que** chacune des structures de support comprend :
- une structure supérieure pour maintenir le rouleau vertical supérieur (1a), qui modifie la course continue de sa trajectoire de nettoyage lorsqu'il atteint un obstacle extérieur (6) du véhicule à laver ; ladite modification de la trajectoire de nettoyage permettant à l'obstacle extérieur (6) d'être évité ;
- une structure inférieure pour maintenir le rouleau vertical inférieur (1b), qui maintient un contact continu contre la surface externe du véhicule, même contre chacune des surfaces sous l'obstacle extérieur (6) ;
dans lequel les rouleau vertical supérieur (1a) et rouleau vertical inférieur (1b) agissent comme une seule brosse le long de leur trajectoire entière à l'exception de la surface de l'obstacle extérieur (6) à éviter.

2. Dispositif pour éviter des éléments en saillie sur des véhicules pendant le procédé de lavage, selon la revendication 1, **caractérisé en ce que** :
- la structure supérieure pour maintenir le rouleau vertical supérieur (1a) comprend une tête basculante (8) à laquelle une extrémité supérieure du rouleau vertical supérieur (1a) est connectée dans une manière de porte-à-faux ;
- la structure inférieure pour maintenir le rouleau vertical inférieur (1b) comprend un premier cadre fixe (9) ;
- à la fois la tête basculante (8) et le premier cadre fixe (9) sont couplés à un premier encadrement rectangulaire (7) qui forme une partie de chacune des structures de support, lesquelles s'articulent autour du pont fixe (3).

3. Dispositif pour éviter des éléments en saillie sur des véhicules pendant le procédé de lavage, selon la revendication 2, **caractérisé en ce que** :
- la tête basculante (8) tourne au moyen d'un premier cylindre pneumatique (11), lequel est connecté de manière articulée sur une prolongation du premier encadrement rectangulaire (7), alors que la barre du premier cylindre pneumatique (11) est connectée à une extension (8a) qui est la continuation de la tête basculante (8) ;
- la tête basculante (8) tourne autour d'un arbre horizontal (12) joint à une extrémité du premier encadrement rectangulaire (7) ;
dans lequel le rouleau vertical supérieur (1a) se déplace dans un plan vertical qui est parallèle au plan vertical où le premier encadrement rectangulaire (7) est disposé.

4. Dispositif pour éviter des éléments en saillie sur des véhicules pendant le procédé de lavage, selon la revendication 1, **caractérisé en ce que**
- la structure supérieure pour maintenir le rouleau vertical supérieur (1a) comprend un cadre pliable (13) ;
- la structure inférieure pour maintenir le rouleau vertical inférieur (1b) comprend un second cadre fixe (9') ;
- à la fois le cadre pliable (13) et le second cadre fixe (9') sont couplés à un second encadrement rectangulaire (7') qui forme une partie de chacune des structures de support, qui s'articulent autour du pont fixe (3).

5. Dispositif pour éviter des éléments en saillie sur des véhicules pendant le procédé de lavage, selon la revendication 4, **caractérisé en ce que** la mobilité du cadre pliable (13) est réalisée au moyen d'un second cylindre pneumatique (14) couplé au second encadrement rectangulaire (7') et dont la barre est connectée audit cadre pliable (13), le dernier étant déplacé autour d'un second arbre vertical (10') du second encadrement rectangulaire (7').

6. Dispositif pour éviter des éléments en saillie sur des véhicules pendant le procédé de lavage, selon la revendication 1, **caractérisé en ce que** :
- la structure supérieure pour maintenir le rouleau vertical supérieur (1a) comprend un renfort supérieur pliable (15) ;
- la structure inférieure pour maintenir le rouleau vertical inférieur (1b) comprend un renfort inférieur fixe (16) ;
- les deux renforts (15) et (16) comprennent une configuration coudée, et sont couplés à leur tour à l'arbre vertical principal (4) lié à chacun des profils verticaux (3a) du pont fixe (3).
